# EUROPEAN PATENT APPLICATION

(11) **EP 1 076 391 A1**
(43) Date of publication of application: **14.02.2001**
(21) Application number: 00306757.6
(22) Date of filing: 08.08.2000
(51) Int. Cl.: H02G 15/04

(54) **Insulating cap**

(30) Priority: 11.08.1999 GB 9918977
(71) Applicant: Rewires (Devon) Limited, Paignton, Devon TQ4 7RE (GB)
(72) Inventor: Cane, Frederick Charles, Totnes, Devon (GB)
(74) Representative: Harrison, Ivor Stanley

(57) **Abstract**

An insulating cap for protecting the free end of an electrical cable comprises a housing for receiving the cable end and a cable-gripper element associated with the housing, in which the gripper element is movable relative to the housing between a position which permits unimpended cable entry and a position which resists cable withdrawal from the housing. The cable-gripper element may have rotary or linear movement with respect to the housing.

## Description

This invention relates to a cap for insulating the ends of electrical cables.

When wiring buildings it is currently common practice to install the layout of the cabling, comprising "live" and "return" conductor wires individually sleeved in an insulating plastics coating and held, optionally together with an "earth" wire, in an outer resilient plastics insulating sheath, prior to the installation of the relevant electrical fittings. This practice is known as "first fix" installation; during the first-fix the cabling is installed behind the walls, below floors or above ceilings, together with any appropriate end-site metal boxes, leaving unprotected cable ends or bare conductor wires protruding from the walls, ceilings or floors at the points where electrical fittings are to be installed. The cables are connected to the relevant electrical fittings in the "second fix" installation. However, second-fix generally does not occur immediately after first-fix and thus unprotected cable ends or bare conductor wires are left exposed for a period of time during which they may be damaged, become contaminated by other building materials in use in the building or, most importantly, present a serious potential hazard to users of the building particularly when the cables are live. The cables may be live when wiring in another part of the building is being tested or simply accidentally.

To date, it is known to attempt to overcome this problem by insulating the ends of cables either with electrical insulating tape or by using protective caps comprising a blind ended housing which is applied over the free end of the cable. In such caps the interior of the housing is profiled or provided with teeth to prevent unintentional separation of the cable and the cap. Two-piece caps have also been developed which comprise a blind housing and a retention element fitted thereto for holding the cable; such caps may also contain a sealing material and are known from EP-A-0267045. However, the disadvantage of using known caps is that the cable has to be inserted forcibly into the housing, with the result that the cable bends or buckles. Only a small portion of the cable end is thus actually inserted into the housing, which may be insufficient for secure retention purposes.

To overcome this problem, it has been proposed to form the housing in two parts which are snap-engageable or otherwise attachable together, but the problem with such caps is to achieve positive snap-engagement, or otherwise to maintain the parts in the fully-closed condition while they are being attached together, against the force exerted by the resilient cable sheathing, the cable having been previously laid in one of the parts.

It is therefore an object of the present invention to provide an insulating cap of the type described, in which the cable end may be more easily inserted.

According to one aspect of the present invention, there is provided an insulating cap for protecting the free end of an electrical cable, the cap comprising a housing for receiving the cable end and a cable-gripper element associated with the housing, in which the gripper element is movable relative to the housing between a position which permits unimpended cable entry and a position which resists cable withdrawal from the housing.

The gripper element functions by urging the cable against the opposite wall of the housing to resist withdrawal by friction against the resilient sheathing of the cable.

Preferably, the gripper element includes a cable contacting surface which comprises cable indentation or deformation means to enhance cable retention within the housing. Preferably, the inner surface of the housing also comprises cable retaining formations which cooperate with the movable gripper element to retain the cable end within the housing. The formations may be disposed at an angle to impede withdrawal of the cable from the housing while not impending entry thereof. The cable gripping elements may engage the sheathing of the cable, preferably with compression or deformation thereof, at a single, discrete location, or at a plurality of locations along the length of that portion of the cable held within the housing. The movement of the gripper element relative to the housing may be rotary or linear.

In a rotary embodiment, the cable gripper element may comprise a disc rotatably mounted within and protruding internally from one wall of the housing, the disc including a radially-directed edge projection for engaging the cable, whereby insertion of the cable causes the disc to rotate in one direction to a position where the edge projection does not prevent further insertion of the cable but attempted withdrawal thereof causes the disc to rotate in the other direction to a position where the projection engages the cable and effectively retains it in the housing by a jamming action, urging the cable against the opposite wall of the housing. Preferably, to accommodate cables of different size, the disc has an edge zone of progressively-increasing radius followed by a zone of progressively-decreasing radius to define the projection in the manner of a cam lobe, although more preferably the edge is cut back from the maximum-radius position towards the centre in the manner of a snail cam or is even undercut to form a claw-like projection, to grip the cable sheathing by indentation or penetration thereof, for which purpose the claw-like projection preferably terminates in a point. The disc may include associated stop means to restrain movement in the said other direction, at a position of optimum extent and angle of indentation, and may be biased in the said other direction. Optionally, the disc includes means to rotate it from outside the housing, for example using a screwdriver, to enable it to be moved from the non-engagement position to the engagement position, especially where the cabling is of relatively small size such that attempted withdrawal thereof from the housing will not of itself cause the disc to move to the engagement position. The stop means may comprise a post or peg mounted to prevent movement of the disc beyond the desired position; preferably, the underside of the projection is formed as a ramp surface such that the disc can be manually rotated to override the post to the engagement position, the post then locking the disc by preventing movement in the other direction.

In a linear embodiment, the cable gripper element may comprise an elongate gripping member which, in use, is slidable within the housing against one wall to urge the cable against the opposite wall of the housing. Insertion of the gripping member into the housing may be facilitated by a guide track on the inside of the housing. Preferably, the cable gripping member comprises an array of ridges, teeth or other projections to deform or indent the cable sheathing. The projections may be angled or otherwise adapted to enhance resistance to withdrawal of the cable from the housing. The member may be tapered and/or the internal cavity of the housing may be profiled to provide a jamming effect on the cable between the member and the opposite wall of the housing, the jamming force increasing the further the cable is inserted in the housing.

Optionally, the cable gripper element is attached to the housing, for example by means of a strap which may be integrally formed with the housing and with the cable gripping member. Conveniently, the strap forms a loop when the gripping member is inserted in the housing; the loop may then be used to fasten the cable in a predetermined place, for example during plastering.

In use, to insert a cable into the housing the cable gripping member is laid over the cable, and the member and cable are simultaneously driven into the housing, whereby the cable is secured in the housing by frictional engagement between the gripping member and the opposite wall of the housing.

Preferably, the cap is formed from a plastics material. More preferably, the cap is disposable. The housing may be unitary or formed in two or more parts which are connectable together by, for example, snap action. The parts may be separately formed or linked together for example by a hinge connection.

Embodiments of the invention will now be described by way of example only, with reference to the accompanying drawings of which:
Figure 1 is an internal side elevation of one half of a snap-together insulating cap according to one embodiment of the invention; and
Figure 2 is a longitudinal section of an insulating cap according to another embodiment of the invention.

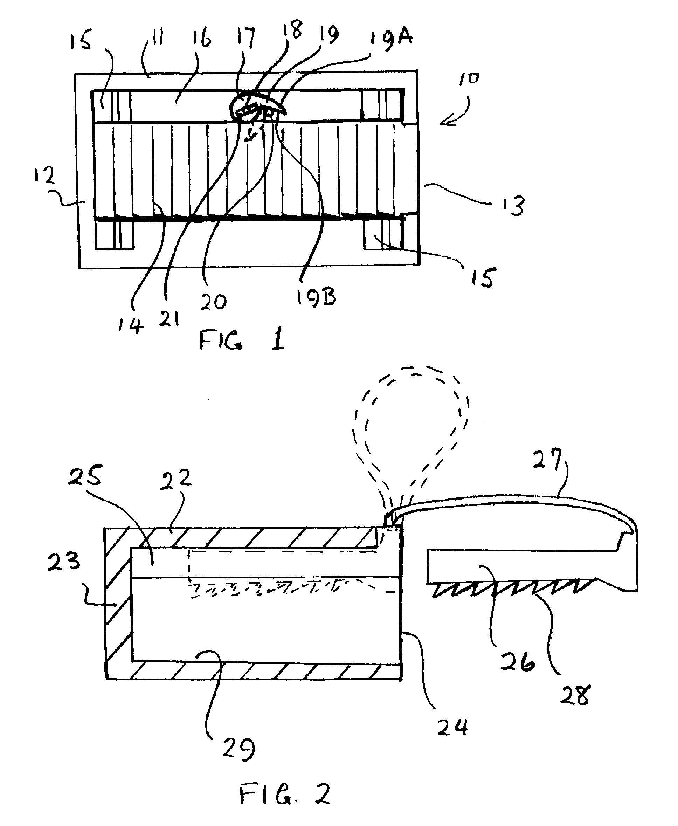

Referring to Figure 1, the insulating cap 10 comprises a housing 11 having a blind or closed end 12 and an open end 13. An array of ridges 14 project from the inner surface, sloping upwardly towards the blind end 12. The housing is formed as two parts; the part as illustrated has male harpoon clamp posts 15 which engage by snap action in corresponding female recesses formed in the other part.

The upper wall of the housing is cut away between the clamp posts to form a longitudinal channel 16 which accommodates a disc 17 rotatably carried on pin 18. The disc is formed with a claw 19 the underside of which has an upwardly-sloping ramp surface between the external (thick) edge 19A and the internal (thin) edge 19B. A post 20 is provided in the channel to limit the extent of anti-clockwise rotational movement of the disc 17 once it is in the operative, engagement, position shown in dashed outline. The disc has a screwdriver slot 21 formed in its upper surface and an aperture is provided in the other part of the housing to allow access to the slot by the blade of an electrically-insulated screwdriver, to comply with safety regulations, should the blade inadvertently engage a live cable.

In use, a cable end is inserted through the open end 13 of the housing. If the cable is sufficiently large to occupy most of the internal volume of the housing, the disc can initially be rotated with a screwdriver in a clockwise direction so that the ramp surface of the claw overrides the post 20 with temporary outward resilient deformation of the two parts of the housing, until the post snaps into place behind the external edge 19A of the claw projection, to adopt the position shown in dashed outline; further insertion of the cable past the protruding claw causes further clockwise rotation of the disc to allow unimpeded further entry of the cable until it reaches the blind end 12. The cable is then loosely held between the outer edge of the claw 19 and the lower wall of the housing. On any attempt to withdraw the cable end from the housing, the disc 17 will rotate with initial movement of the cable in an anti-clockwise direction to adopt the operative engagement position, thus urging the claw to bite into the resilient cable sheathing to resist any further movement of the cable, aided by the ridges 14. The post 20 maintains the disc and hence the claw in the optimum position for maximum deformation of or penetration in the cable sheathing. Preferably, the outer edge of the claw 19 is roughened or provided with ridges or other protrusions to ensure that linear movement of the cable causes rotary movement of the disc. If the cable is smaller, it is fully inserted in the housing and the disc is then rotated with a screwdriver from the position as shown in solid outline to the operative engagement position, with overriding of the post 20 by the ramp surface as previously described.

Referring to Figure 2, a housing 22 in the form of a rectangular-section cylinder having a blind end 23 and an open end 24 is provided with an internal roof channel 25. A rod or strip 26, adapted for longitudinal sliding movement in the channel 25, is attached to the housing by integrally-formed strap 27. The strip 26 carries an array of dependent teeth 28, angled towards the blind end of the housing and formed on a slope so that, as shown in dashed outline on insertion of the strip 26 in the channel 25, the teeth toward the blind end protrude into the cavity of the cylinder to a greater extent than the teeth toward the open end. The floor 29 of the housing also slopes upwardly, typically at an angle of 1°, towards the blind end.

In use, the strip 26 is overlaid on a cable end and the strip and cable end are together inserted in the housing. The further they penetrate the housing, the greater is the extent to which the teeth deform or bite into the resilient cable sheathing, especially toward the blind end by virtue of the sloping floor and the more protruding teeth. The cable is thus maintained in the housing together with the strip by a jamming action. The strap 27 forms a loop which may conveniently be used to locate the protected cable end in a desired position.

In either embodiment, the housing may include a printed, stamped or embossed warning about the possibility of the cable being live and the need to exercise caution when cutting through the cable to remove the insulating cap or removing the insulating cap from the cable end by levering or prising it off using a screwdriver. Additionally or alternatively, a spark-eroded surface to the housing may be provided to enable cable-indentification data to be applied using a pencil or felt pen.

## Claims

1. An insulating cap for protecting the free end of an electrical cable, the cap comprising a housing for receiving the cable end and a cable-gripper element associated with the housing, in which the gripper element is movable relative to the housing between a position which permits unimpended cable entry and a position which resists cable withdrawal from the housing.

2. An insulating cap according to claim 1, in which the gripper element includes a cable contacting surface which comprises cable indentation or deformation means.

3. An insulating cap according to claim 1 or claim 2, in which the inner surface of the housing comprises cable retaining formations cooperable with the movable gripper element to retain the cable end within the housing in use.

4. An insulating cap according to claim 3, in which the formations are disposed at an angle to impede withdrawal of the cable from the housing while not impending entry thereof.

5. An insulating cap according to any preceding claim in which the movement of the gripper element relative to the housing is rotary.

6. An insulating cap according to claim 5, in which the cable gripper element comprises a disc rotatably mounted within and protruding internally from one wall of the housing, the disc including a radially-directed edge projection for engaging the cable and being rotatable in one direction to allow cable insertion and rotatable in the other direction to prevent cable withdrawal.

7. An insulating cap according to claim 6, in which the disc has an edge zone of progressively-increasing radius followed by a zone of progressively-decreasing radius to define the projection in the manner of a cam lobe, the edge being preferably cut back from the maximum-radius position towards the centre in the manner of a snail cam or to form a claw-like projection.

8. An insulating cap according to claim 6 or claim 7, in which the disc includes associated stop means to restrain movement in the said other direction, at a predetermined position of extent and angle of indentation with respect to a cable engaged therein.

9. An insulating cap according to any of claims 6 to 8, in which the disc includes means to rotate it from outside the housing.

10. An insulating cap according to any of claims 1 to 4, in which the movement of the gripper element relative to the housing is linear.

11. An insulating cap according to claim 10, in which the cable gripper element comprises an elongate gripping member which, in use, is slidable within the housing against one wall to urge the cable against the opposite wall of the housing.

12. An insulating cap according to claim 10 or claim 11, in which the cable gripping member comprises an array of ridges, teeth or other projections to deform or indent the cable sheathing.

13. An insulating cap according to any of claims 10 to 12, in which the member is tapered and/or the internal cavity of the housing is profiled to provide a jamming effect on the cable between the member and the opposite wall of the housing, the jamming force increasing the further the cable is inserted in the housing.

14. An insulating cap according to any of claims 10 to 13, in which the cable gripper element is attached to the housing by means of a strap.

15. An insulating cap according to any preceding claim, in which the housing is formed in two or more parts which are connectable together.
